(19) Europäisches Patentamt
European Patent Office
Office européen des brevets

(11) Veröffentlichungsnummer: **0 393 442 A2**

(12) **EUROPÄISCHE PATENTANMELDUNG**

(21) Anmeldenummer: **90106667.0**

(51) Int. Cl.$^5$: **C09K 19/42, G02F 1/137**

(22) Anmeldetag: **06.04.90**

(30) Priorität: **19.04.89 DE 3912762**

(43) Veröffentlichungstag der Anmeldung:
**24.10.90 Patentblatt 90/43**

(84) Benannte Vertragsstaaten:
**DE GB**

(71) Anmelder: **MERCK PATENT GESELLSCHAFT MIT BESCHRÄNKTER HAFTUNG**
**Frankfurter Strasse 250**
**D-6100 Darmstadt(DE)**

(72) Erfinder: **Plach, Herbert, Dr.**
**Wingertsbergstrasse 5**
**D-6100 Damrstadt(DE)**
Erfinder: **Weber, Georg**
**Wilhelm-Leuschner-Strasse 38**
**D-6106 Erzhausen(DE)**
Erfinder: **Hittich, Reinhard, Dr.**
**Am Kirchberg 11**
**D-6101 Modautal 1(DE)**
Erfinder: **Poetsch, Eike, Dr.**
**Am Buchwald 4**
**D-6109 Mühltal(DE)**

(54) **Supertwist-Flüssigkristallanzeige.**

(57) Supertwist-Flüssigkristallanzeigen mit sehr kurzen Schaltzeiten werden erhalten, falls die nematische Flüssigkristallmischung mindestens eine Komponente, ausgewählt aus der Gruppe A, bestehend aus Verbindungen der Formeln AI bis AVI:

EP 0 393 442 A2

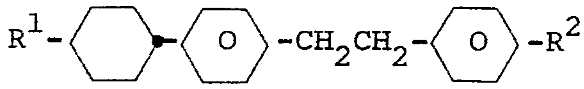
AI

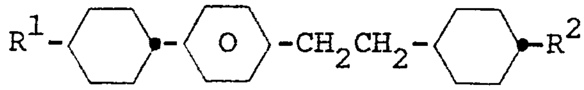
AII

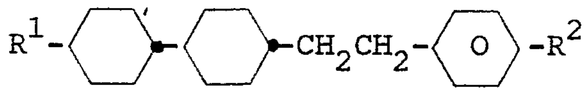
AIII

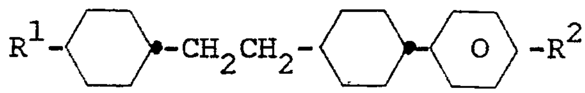
AIV

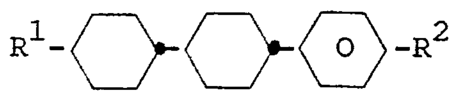
AV

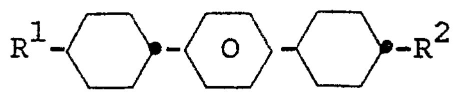
AVI

worin $R^1$ und $R^2$ jeweils unabhängig voneinander jeweils R bedeuten und R Alkyl mit 1-12 C-Atomen ist, worin auch eine oder zwei nicht benachbarte $CH_2$-Gruppen durch -O-, -CH=CH-, -CO-, -O-CO- oder -CO-O- ersetzt sein können,
und bis zu vier weiteren Komponenten enthält.

## Supertwist-Flüssigkristallanzeige

Die Erfindung betrifft Supertwist-Flüssigkristallanzeigen (SFA) mit sehr kurzen Schaltzeiten und guten Steilheiten und Winkelabhängigkeiten sowie die darin verwendeten neuen nematischen Flüssigkristallmischungen.

SFA gemäß Oberbegriffs sind bekannt, z.B. aus EP 0 131 216 B1; DE 34 23 993 A1; EP 0 098 070 A2; M. Schadt unf F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, App. Phys. Lett. 50 (5), 236 (1987) und E.P. Raynes, Mol. Cryst. Liq. Cryst. Letters Vol. 4 (1), pp. 1-8 (1986). Der Begriff SFA umfaßt hier jedes höher verdrillte Anzeigeelement mit einem Verdrillungswinkel dem Betrage nach zwishen 160° und 360°, wie beispielsweise die Anzeigeelemente nach Waters et al. (C.M. Waters et al., Proc. Soc. Inf. Disp. (New York) (1985) (3rd Intern. Display Conference, Kobe, Japan), die STN-LCD's (DE OS 35 03 259), SBE-LCD's (T.J. Scheffer und J. Nehring, Appl. Phys: Lett. 45 (1984) 1021), OMI-LCD's (M. Schadt und F. Leenhouts, Appl. Phys. Lett. 50 (1987), 236, DST-LCD's (EP OS 0 246 842) oder BW-STN-LCD's (K. Kawasaki et al., SID 87 Digest 391 (20.6)).

Derartige SFA zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus. Von besonderem Interesse sind SFA mit sehr kurzen Schaltzeiten insbesondere auch bei tieferen Temperaturen. Zur Erzielung von kurzen Schaltzeiten wurden bisher insbesondere die Viskositäten der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Es besteht somit immer noch ein großer Bedarf nach SFA mit sehr kurzen Schaltzeiten bei gleichzeitig großem Arbeitstemperaturbereich, hoher Kennliniensteilheit, guter Winkelabhängigkeit des Kontrastes und niedriger Schwellenspannung.

Der Erfindung liegt die Aufgabe zugrunde, SFA bereitzustellen, die die oben angegebenen Nachteile nicht oder nur in geringerem Maße und gleichzeitig sehr kurze Schaltzeiten aufweisen.

Es wurde nun gefunden, daß diese Aufgabe gelöst werden kann, wenn man nematische Flüssigkristallmischungen verwendet, die folgende Komponenten enthalten:

a) mindestens eine Komponente, ausgewählt aus der Gruppe A, bestehend aus Verbindungen der Formeln AI bis AVI:

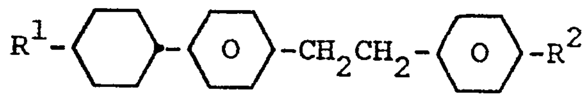

AI

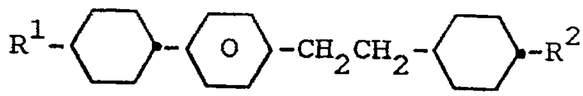

AII

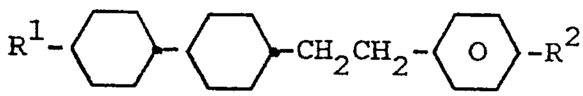

AIII

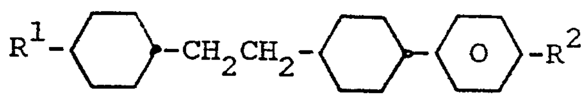

AIV

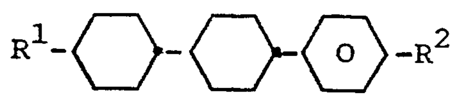

AV

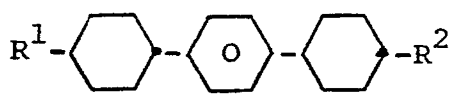

AVI

worin $R^1$ und $R^2$ jeweils unabhängig voneinander jeweils R bedeuten und R Alkyl mit 1-12 C-Atomen ist, worin auch eine oder zwei nicht benachbarte $CH_2$-Gruppen durch -O-, -CH=CH-, -CO-, -O-CO- oder -CO-O- ersetzt sein können,

b) 0-40 Gew.% einer flüssigkristallinen Komponente B bestehend aus Verbindungen ausgewählt aus den Gruppen B1, B2 und B3, wobei Gruppe B1 aus den Verbindungen der Formeln BI bis BIV besteht:

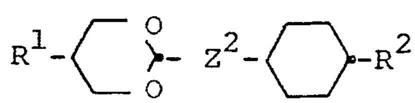

BI

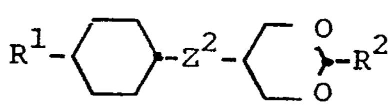

BII

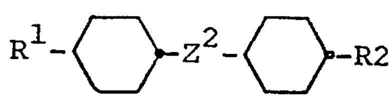

BIII

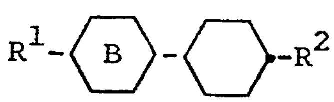

BIV

worin $R^1$ und $R^2$ jeweils unabhängig voneinander die für R angegebene Bedeutung haben, $Z^2$ $-CH_2CH_2-$, -CO-O-, -O-CO- oder eine Einfachbindung, und

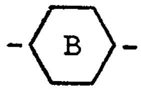 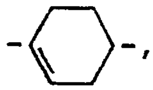, 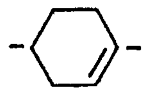 oder 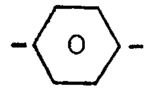

bedeutet;
Gruppe B2 besteht aus den Verbindungen der Formeln BV bis BVII:

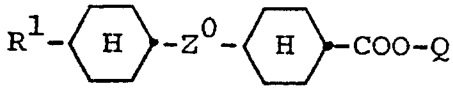 BV

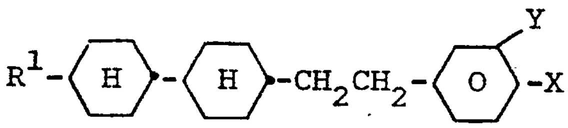 BVI

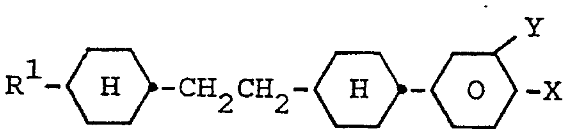 BVII

worin $R^1$ die für R angegebene Bedeutung hat,
$Z^0$ $-CH_2CH_2-$ oder eine Einfachbindung ist und

Q 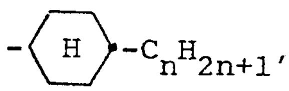, 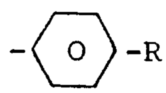 oder 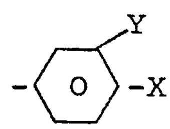

bedeutet,
wobei n 1 bis 9 ist, X bedeutet CN oder F und Y ist H oder F; und
Gruppe B3 besteht aus den Verbindungen der Formeln BVIII und BIX:

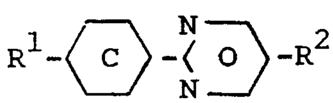 BVIII

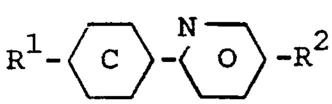 BIX

worin $R^1$ und $R^2$ jeweils unabhängig voneinander die für R angegebene Bedeutung haben, und

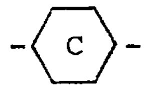 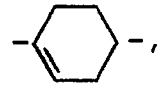, 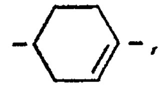, 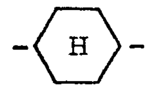

oder 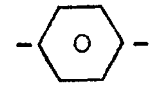 bedeutet,

c) 10-80 Gew.% einer flüssigkristallinen Komponente C, bestehend aus einer oder mehreren Verbindungen mit einer dielektrischen Anisotropie von über +1,5, wobei Komponente C mindestens eine Verbindung der Formal Ca enthält,

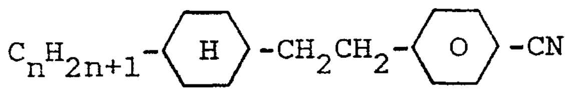 Ca

worin n 1 bis 7 bedeutet,

d) 0-20 Gew.% einer flüssigkristallinen Komponente D, bestehend aus einer oder mehreren Verbindungen mit einer dielektrischen Anisotropie von unter -1,5 und

e) einer optisch aktiven Komponente E in einer Menge, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt, und daß die nematische Flüssigkristallmischung einen nematischen Phasenbereich von mindestens 60 °C, eine Viskosität von nicht mehr als 30 mPa.s und eine dielektrische Anisotropie von mindestens +5 aufweist, wobei die dielektrischen Anisotropien der Verbindungen und die auf die nematische Flüssigkristallmischung bezogenen Parameter auf eine Temperatur von 20 °C bezogen sind.

Gegenstand der Erfindung ist somit eine entsprechende SFA sowie auch entsprechende Flüssigkristallmischungen zur Verwendung in SFA.

Die einzelnen Verbindungen der Formeln AI bis AVI, BI bis BIV, Ca und CI bis CIII oder auch andere Verbindungen, die in den erfindungsgemäßen SFA verwendet werden können, sind entweder bekannt, oder sie können analog zu den bekannten Verbindungen hergestellt werden.

Bevorzugte erfindungsgemäß verwendbare Flüssigkristallmischungen enthalten eine oder mehrere Verbindungen aus der Gruppe A in einem Anteil von 4 % bis 40 %, vorzugsweise 10 % bis 32 %. Verbindungen der Formeln AIII bis AVI sind bevorzugt. In einer besonders bevorzugten Ausführungsform enthalten die Mischungen gleichzeitig (a) Verbindungen der Formel AV und/oder AVI und (b) Verbindungen der Formel AIII und/oder AIV. $R^1$ und $R^2$ bedeuten vorzugsweise jeweils unabhängig voneinander n-Alkyl mit 1 bis 7 C-Atomen oder (trans)-n-Alkenyl mit 3 bis 7 C-Atomen.

Der Anteil der Komponente(n) aus Gruppe B1 beträgt vorzugsweise 5 % bis 45 %, insbesondere bevorzugt ca. 10 % bis 40 %. Komponenten der Formeln BIII und BIV sind bevorzugt. Besonders bevorzugte Verbindungen der Formel BIII sind diejenigen der folgenden Teilformeln:

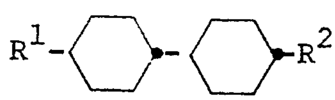

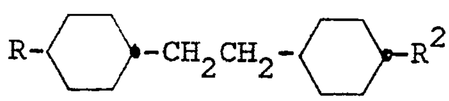

worin

$R^1$ $CH_3-(CH_2)_n-O-$, $CH_3-(CH_2)_t-$, trans-$H-(CH_2)_r-CH=CH-(CH_2CH_2)_s-CH_2O-$ oder trans-$H-(CH_2)_r-CH=CH-(CH_2CH_2)_s-$,

$R^2$ $CH_3-(CH_2)_t-$

n 1, 2, 3 oder 4
r 0, 1, 2 oder 3
s 0 oder 1, und
t 1, 2, 3 oder 4 ist.

Ferner bevorzugt sind diejenigen der Teilformel

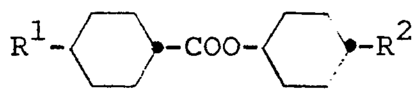

worin $R^1$ und $R^2$ die oben angegebene Bedeutung haben.

Der Anteil der Verbindungen der Formel BIII der oben angegebenen Teilformeln ist vorzugsweise ca. 5 % bis 45 %, insbesondere bevorzugt ca. 10 % bis 35 %. Besonders bevorzugte Verbindungen der Formel BIV sind diejenigen der folgenden Teilformel:

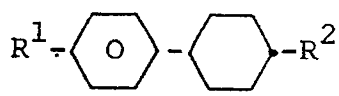

worin
$R^1$ $CH_3$-$(CH_2)_n$-O- oder trans-H-$(CH_2)_r$-CH = CH-$(CH_2CH_2)_s$-$CH_2O$- und $R^2$ $CH_3$-$(CH_2)_t$- ist, wobei
n 1, 2, 3 oder 4,
r 0, 1, 2 oder 3,
s 0 oder 1, und
t 1, 2, 3 oder 4 ist.

Der Anteil dieser Verbindungen, bzw. der Verbindungen der Formel BIV, ist vorzugsweise ca. 5 % bis 40 %, insbesondere bevorzugt ca. 10 % bis 35 %.

Vorzugsweise enthalten die Mischungen Verbindungen der Formel III, insbesondere solche der Teilformel

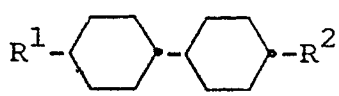

In einer besonders bevorzugten Ausführungsform enthalten die Mischungen gleichzeitig Verbindungen der Formeln BIII und BIV, wobei der Gesamtanteil für Komponenten der Gruppe B1 gewahrt bleibt.

Falls Verbindungen der Formeln BI und/oder BIII vorhanden sind, bedeuten $R^1$ und $R^2$ vorzugsweise jeweils unabhängig voneinander n-Alkyl mit 1 bis 7 C-Atomen oder (trans)-n-Alkenyl mit 3 bis 7 C-Atomen. $Z^2$ ist vorzugsweise eine Einfachbindung. BI ist besonders bevorzugt.

Ferner bevorzugt sind erfindungsgemäße Mischungen, die einer oder mehrere Verbindungen der Formel BIV enthalten, worin

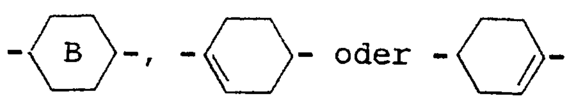

bedeutet und $R^1$ und $R^2$ eine der oben angegebenen bevorzugten Bedeutungen haben, insbesondere bevorzugt n-Alkyl mit 1 bis 7 C-Atomen bedeuten.

In jedem Fall bleibt der Gesamtanteil für Komponenten der Gruppe B1 gewahrt.

Der Anteil der Verbindungen der Gruppe B2 beträgt vorzugsweise ca. 5 % bis 45 %, insbesondere bevorzugt 5 % bis 20 %. Der Anteil (bevorzugte Bereiche) für BV bis BVII ist wie folgt:
BV ca. 5 % bis 30 %, vorzugsweise ca. 5 % bis 15 %
Summe BVI und BVII: ca. 5 % bis 25 %, vorzugsweise ca. 10 % bis 20 %.

Bevorzugte Verbindungen der Gruppe B2 sind im folgenden angegeben:

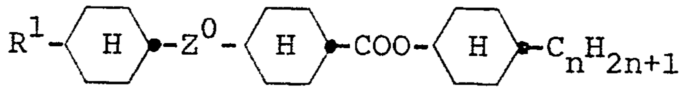

BV1

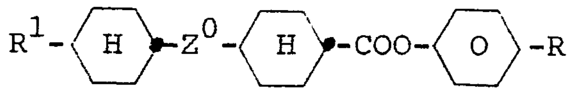

BV2

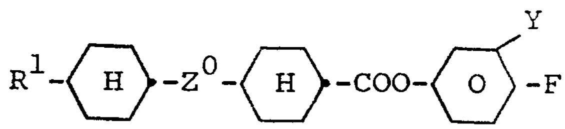

BV3

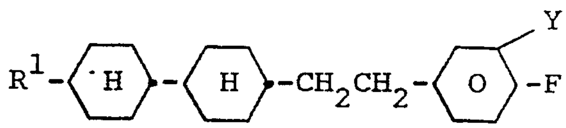

BVI1

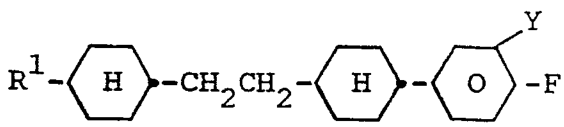

BVII1

$R^1$ ist vorzugsweise n-Alkyl mit 1 bis 7 C-Atomen oder (Trans)-n-Alkenyl mit 3 bis 7 C-Atomen. $Z^0$ ist vorzugsweise eine Einfachbindung. R hat vorzugsweise die oben für $R^1$ angegebene bevorzugte Bedeutung oder bedeutet Fluor. Y ist vorzugsweise Fluor.

Vorzugsweise enthalten die erfindungsgemäßen Mischungen eine oder mehrere Verbindungen ausgewählt aus der Gruppe bestehend aus BV3, BVI1 und BVII1 in einem Gesamtanteil von ca. 5 bis 35 %.

In einer besonders bevorzugten Ausführungsform enthalten die erfindungsgemäßen Mischungen neben BV3, BVI1, BVII1 und BV2 (R = F) weitere terminal fluorierte Verbindungen zum Beispiel ausgewählt aus der Gruppe bestehend aus:

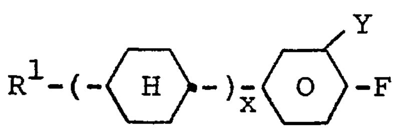

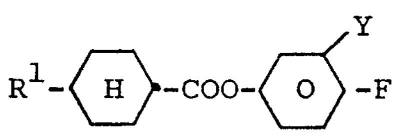

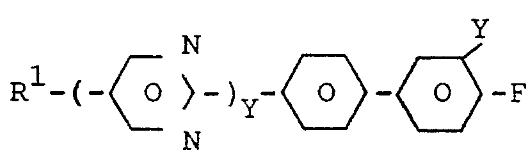

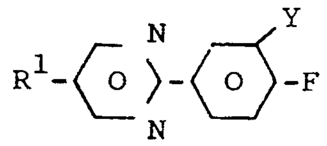

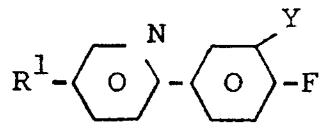

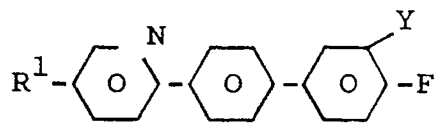

worin $R^1$ vorzugsweise n-Alkyl mit 1 bis 7 C-Atomen oder (trans)-n-Alkenyl mit 3 bis 7 C-Atomen, X 1 oder 2, y 0 oder 1 und Y H oder F bedeutet.

Der Gesamtanteil aller terminal fluorierter Verbindungen beträgt vorzugsweise ca. 5 % bis 65 %, insbesondere ca. 15 % bis 40 %..

Der Anteil der Verbindungen aus Gruppe B3 beträgt vorzugsweise ca. 5 % bis 30 %, insbesondere bevorzugt ca. 10 % bis 20 %. $R^1$ ist vorzugsweise n-Alkyl oder n-Alkoxy mit jeweils 1 bis 9 C-Atomen. $R^2$ ist vorzugsweise n-Alkyl mit 1 bis 9 C-Atomen. Es können jedoch auch analoge Verbindungen mit Alkenyl- bzw. Alkenyloxy-Gruppen eingesetzt werden. Verbindungen der Formel BVIII sind bevorzugt

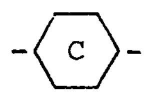

ist vorzugsweise 1,4-Phenylen.

Die erfindungsgemäßen Mischungen enthalten Verbindungen aus mindestens einer der Gruppen B1, B2 und B3. Vorzugsweise enthalten sie eine oder mehrere Verbindungen aus Gruppe B1 und eine oder mehrere Verbindungen aus Gruppe B2 und/oder B3.

Der Anteil der Verbindungen der Komponente C ist vorzugsweise ca. 10 % bis 80 %, insbesondere ca. 20 % bis 70 %. Der Fachmann kann zur Einstellung der gewünschten Schwellenspannung leicht diesen Anteil einstellen, wobei prinzipiell neben den Verbindungen der Formel Ca alle üblichen Flüssigkristallverbindungen mit $\Delta\epsilon > +1,5$ verwendet werden können. Der Anteil der Verbindungen der Formel Ca liegt vorzugsweise bei 10 % bis 45 %, insbesondere 15 % bis 35 %. Falls überwiegend weniger stark positive terminal fluorierte Verbindungen (siehe oben) verwendet werden, bewegt sich der Gesamtanteil mehr im oberen Bereich (ca. 35 % bis 80 %), während bei Verwendung von terminal cyan-substituierten Verbindungen der Anteil niedriger sein kann (ca. 10 % bis 35 %). Besonders bevorzugte Verbindungen sind neben den oben angegebenen terminal fluorierten Verbindungen die hier folgenden genannten bevorzugten Cyanverbindungen:

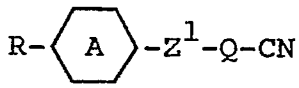 CI

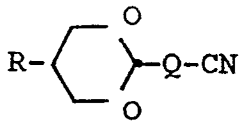 CII

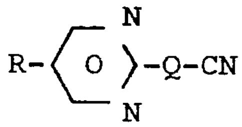 CIII

worin
R die in Anspruch 1 angegebene Bedeutung hat,

Q 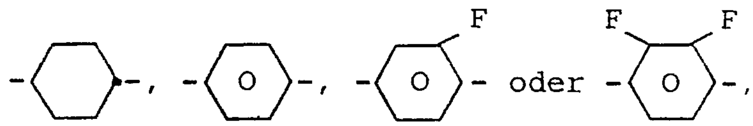

$Z^1$ 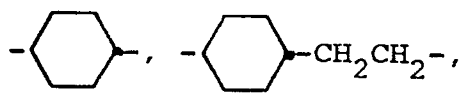

eine Einfachbindung, -CO-O- oder -O-CO- und

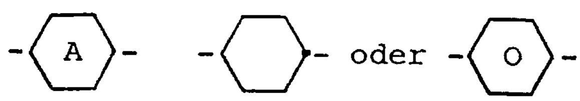

bedeutet.

Einige besonders bevorzugte kleinere Gruppen sind im folgenden angegeben:

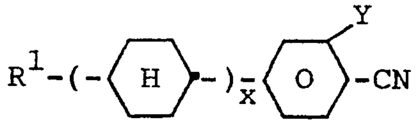 C1

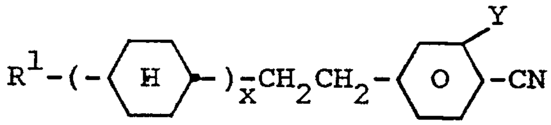 C2

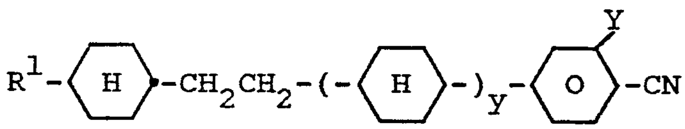 C3

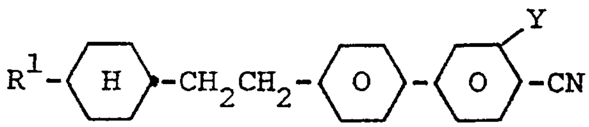 C4

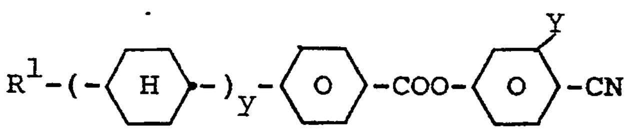 C5

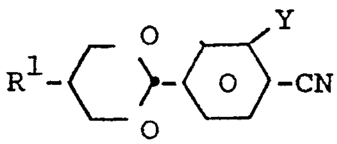 C6

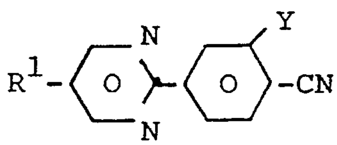 C7

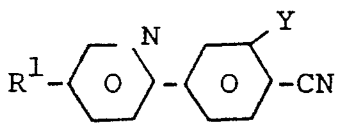 C8

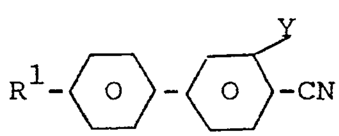 C9

$R^1$ bedeutet vorzugsweise n-Alkyl mit 1 bis 7 C-Atomen, n-Oxaalkyl mit 3 bis 7 C-Atomen (z.B. n-Alkoxymethyl) oder n-Alkenyl mit 3-7 C-Atomen. Y ist H oder Fluor; X ist 1 oder 2; y ist 0 oder 1.

Ferner bevorzugt sind Isothiocyanate, z.B. der Formel

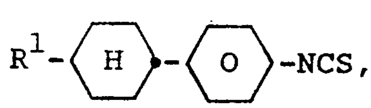

worin $R^1$ n-Alkyl mit 1 bis 7 C-Atomen oder n-Alkenyl mit 3 bis 7 C-Atomen bedeutet.

In einer besonders bevorzugten Ausführungsform enthalten die erfindungsgemäßen Mischungen vorzugsweise ca. 5 % bis 20 % einer oder mehrerer Verbindungen mit einer dielektrischen Anisotropie von unter -1,5 (Komponente D). Derartige Verbindungen sind bekannt, z.B. Derivate des 2,3-Dicyanhydrochinon

oder Cyclohexanderivate mit den Strukturelement

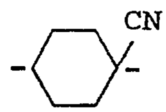

gemäß DE-OS 32 31 707 bzw. DE-OS 34 07 013.

Vorzugsweise werden jedoch Verbindungen mit dem Strukturelement 2,3-Difluor-1,4-phenylen gewählt, z.B. Verbindungen gemäß DE-OS 38 07 801, 38 07 861, 38 07 863, 38 07 864 oder 38 07 908. Besonders bevorzugt sind Tolane mit diesem Strukturelement gemäß der Internationalen Patentanmeldung PCE/DE 88/00133, insbesondere solche der Formeln

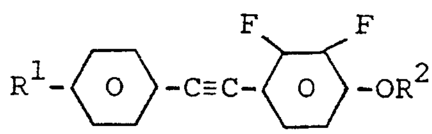

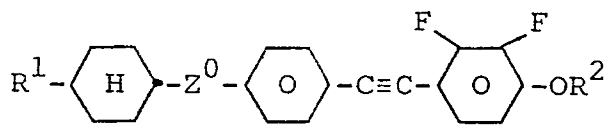

worin $R^1$ und $R^2$ jeweils unabhängig voneinander vorzugsweise n-Alkyl mit 1 bis 7 C-Atomen oder n-Alkenyl mit 3 bis 7 C-Atomen bedeuten und $Z^0$ $-CH_2CH_2-$ oder eine Einfachbindung ist.

Die Komponente D bewirkt insbesondere eine Verbesserung der Steilheit der Kennlinie.

In einer besonders bevorzugten Ausführungsform enthalten die Mischungen ca. 5 % bis 35 %, insbesondere bevorzugt ca. 10 % bis 20 % an flüssigkristallinen Tolan-Verbindungen. Hierdurch kann bei geringeren Schichtdicken (ca. 5-6 µm) gearbeitet werden, wodurch die Schaltzeiten deutlich kürzer werden. Besonders bevorzugte Tolane sind im folgenden angegeben:

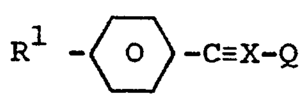

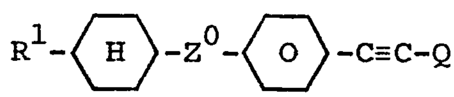

$R^1$ ist vorzugsweise n-Alkyl mit 1 bis 7 C-Atomen,
$Z^0$ ist $-CH_2CH_2-$ oder eine Einfachbindung,
Q ist

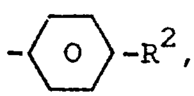 , 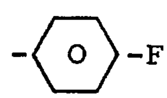 oder 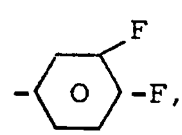 ,

wobei
$R^2$ n-Alkyl oder n-Alkoxy mit jeweils 1 bis 7 C-Atomen oder n-Alkenyl oder n-Alkenyloxy mit jeweils 3 bis 7 C-Atomen bedeutet.

In weiteren besonders bevorzugten Ausführungsformen enthalten die Mischungen

- 30-60 Gew.% Komponente C, 20-70 Gew.% Verbindungen aus den Gruppen A und B, 0-10 Gew.%

Komponente D und eine sich zu 100 Gew.% addierende Menge der Komponente E,
- eine Komponente D, die eine oder mehrere Verbindungen mit einer 1-Cyan-trans-1,4-cyclohexylen-Gruppe oder einer 2,3-Difluor-1,4-phenylen-Gruppe enthält,
- mindestens zwei Verbindungen der Formel AIII oder AV,
- Verbindungen der Formel AIII und AV,
- eine Komponente C, die eine oder mehrere Verbindungen mit einer 4-Fluorphenyl-Gruppe oder einer 3,4-Difluorphenyl-Gruppe enthält,
- mindestens eine Verbindung aus folgender Gruppe:

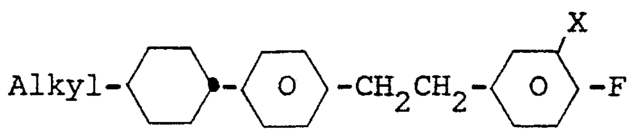

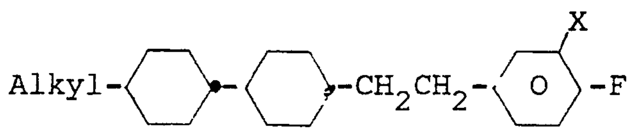

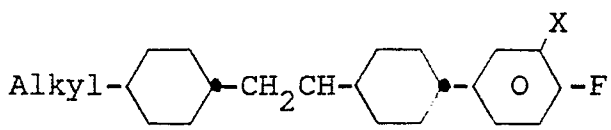

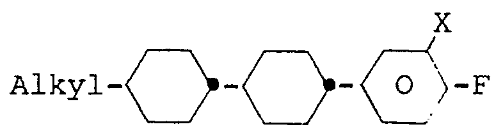

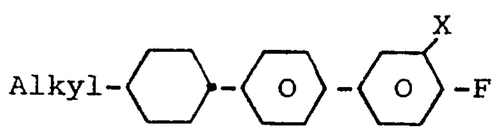

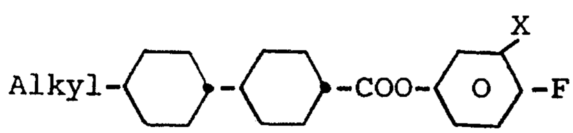

worin Alkyl eine geradkettige Alkylgruppe mit 2-7 C-Atomen und X, H oder F ist,
- eine oder mehrere Verbindungen, worin R eine trans-Alkenylgruppe oder eine trans-Alkenyloxygruppe ist,
- eine oder mehrere Verbindungen ausgewählt aus der folgenden Gruppe

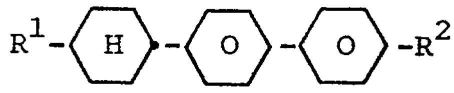

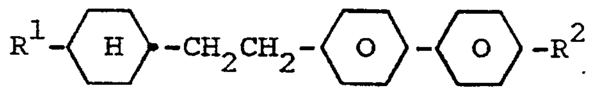

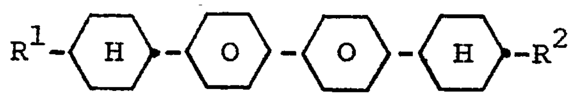

worin $R^1$ und $R^2$ die bei Komponente A angegebenen bevorzugten Bedeutungen haben und eine der beiden 1,4-Phenylengruppen auch durch Fluor substituiert sein kann; der Anteil dieser Verbindungen beträgt 0 % bis 25 %, vorzugsweise ca. 5 % bis 15 %.

Für die Komponente E stehen dem Fachmann eine Vielzahl, zum Teil kommerziell erhältlicher chiraler Dotierstoffe zur Verfügung. Deren Wahl ist an sich nicht kritisch.

Der Aufbau der erfindungsgemäßen Flüssigkristall-Anzeigeelemente aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 360° gegeneinander verdreht ist, entspricht der für derartige Anzeigeelemente üblichen Bauweise. Dabei ist der Begriff der üblichen Bauweise hier weit gefaßt und umfaßt auch alle literaturbekannten Abwandlungen und Modifikationen der Supertwistzelle, insbesondere auch Matrix-Anzeigeelemente sowie die zusätzliche Magnete enthaltenden Anzeigeelemente nach der DE-OS 2 748 738. Der Oberflächentiltwinkel an den beiden Trägerplatten kann gleich oder verschieden sein. Gleiche Tiltwinkel sind bevorzugt.

Ein wesentlicher Unterschied der erfindungsgemäßen Anzeigeelemente zu den bisher üblichen auf der Basis der verdrillten nematischen Zelle besteht jedoch in der Wahl der Flüssigkristallkomponenten der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

Die folgenden Beispiele sollen die Erfindung erläutern, ohne sie zu begrenzen.

Es bedeutet:

S-N Phasenübergangs-Temperatur smektisch-nematisch,

Klp. Klärpunkt,

Visk. Viskosität (m Pa.s),

$T_{on}$ Zeit vom Einschalten bis zur Erreichung von 90 % des maximalen Kontrastes

$T_{off}$ Zeit vom Ausschalten bis zur Erreichung von 10 % des maximalen Kontrastes

Die SFA wird im Multiplexbetrieb angesteuert (Multiplexverhältnis) 1:100, Bias 1:11, Betriebsspannung 18,5 Volt).

Vor und nachstehend sind alle Temperaturen in °C angegeben. Die Prozentzahlen sind Gewichtsprozente. Die Werte für die Schaltzeiten und Viskositäten beziehen sich auf 20 °C.

Beispiel 1

Ein SFA mit Verdrillungswinkel 200° enthaltend eine Flüssigkristallmischung bestehend aus

10 % p-trans-4-Propylcyclohexylbenzonitril,

11 % 1-(trans-4-Propylcyclohexyl)-2-(p-cyanphenyl)-ethan,

8 % 1-(trans-4-Pentylcyclohexyl)-2-(p-cyanphenyl)-ethan,

13 % trans,trans-4-Propoxy-4′-propylcyclohexylcyclohexan,
11 % trans,trans-4-Methoxy-4′-pentylcyclohexylcyclohexan,
10 % trans,trans-4-Ethoxy-4′-pentylcyclohexylcylcohexan,
7 % trans-1-(trans-4-Propylcyclohexyl)-4-(p-ethylphenyl)-cyclohexan,
7 % trans-1-(trans-4-Propylcyclohexyl)-4-(p-propylphenyl)-cyclohexan,
7 % trans-1-(trans-4-Propylcyclohexyl)-4-(p-fluorphenyl)-cyclohexan,
7 % trans-1-(trans-4-Propylcyclohexyl)-4-(3,4-difluorphenyl)-cyclohexan,
3 % 4,4′-Bis-(trans-4-propylcyclohexyl)-2-fluorbiphenyl,
3 % 4,4′-Bis-(trans-4-pentylcyclohexyl)-2-fluorbiphenyl und
3 % 4-(trans-4-Pentylcyclohexyl)-4′-(trans-4-propylcyclohexyl)-2-fluorbiphenyl
zeigt eine steile, stabile elektrooptische Kennlinie und eine sehr geringe Abhängigkeit des Kontrastes vom Blickwinkel.

Beispiel 2

Ein SFA mit Verdrillungswinkel 240° enthaltend eine Flüssigkristallmischung bestehend aus
21 % p-trans-4-Propylcyclohexylbenzonitril,
15 % 1-(trans-4-Propylcyclohexyl)-2-(p-cyanphenyl)-ethan,
12 % 1-(trans-4-Butylcyclohexyl)-2-(p-cyanphenyl)-ethan,
12 % 1-(trans-4-Pentylcyclohexyl)-2(p-cyanphenyl)-ethan,
5 % 4-p-Cyanphenyl-4′-pentylbiphenyl,
10 % 4-Cyan-4′-(trans-4-pentylcyclohexyl)-biphenyl,
10 % trans-1-(trans-4-Propylcyclohexyl)-4-(4-cyanphenyl)-cyclohexan,
10 % trans-1-(trans-4-Propylcyclohexyl)-4-(3,4-difluorphenyl)-cyclohexan und
5 % trans-1-(trans-4-Propylcyclohexyl)-4-(4-cyan-3-fluorphenyl)-cyclohexan,
zeigt eine steile, bistabile elektrooptische Kennlinie und eine sehr geringe Abhängigkeit des Kontrastes vom Blickwinkel.

Beispiel 3

Ein SFA mit Verdrillungswinkel 220° enthaltend eine Flüssigkristallmischung bestehend aus
20 % 1-(trans-4-Propylcyclohexyl)-2-(p-cyanphenyl)-ethan,
10 % 1-(trans-4-Butylcyclohexyl)-2-(p-cyanphenyl)-ethan,
12 % 1-(trans-4-Pentylcyclohexyl)-2-(p-cyanphenyl)-ethan,
13 % trans-1-p-Methoxyphenyl-4-propylcyclohexan,
7 % trans-1-(trans-4-Propylcyclohexyl)-4-(p-ethylphenyl)-cyclohexan,
7 % trans-1-(trans-4-Propylcyclohexyl)-4-(p-propylphenyl)-cyclohexan,
7 % trans-1-(trans-4-Propylcyclohexyl)-4-(p-methylphenyl)-cyclohexan,
7 % trans-1-(trans-4-Propylcyclohexyl)-4-(p-pentylphenyl)-cyclohexan,
6 % 4-(trans-4-Propylcyclohexyl)-4′-methoxy-tolan,
5 % 4-(trans-4-Propylcyclohexyl)-4′-ethoxy-tolan und
6 % 4-(trans-4-Propylcyclohexyl)-4′-propoxy-tolan,
zeigt eine steile, stabile elektrooptische Kennlinie und eine sehr geringe Abhängigkeit des Kontrastes vom Blickwinkel.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Rest $C_nH_{2n+1}$ und $C_mH_{2m+1}$ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten $R^1$, $R^2$, $L^1$ und $L^2$:

| Code für $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | H | F |
| nF | $C_nH_{2n+1}$ | F | H | H |
| nOF | $OC_nH_{2n+1}$ | F | H | H |
| nCl | $C_nH_{2n+1}$ | Cl | H | H |
| nF.F | $C_nH_{2n+1}$ | F | H | F |
| nOmFF | $C_nH_{2n+1}$ | $OC_mH_{2m+1}$ | F | F |
| nmF | $C_nH_{2n+1}$ | $C_mH_{2m+1}$ | F | H |
| $nCF_3$ | $C_nH_{2n+1}$ | $CF_3$ | H | H |
| $nOCF_3$ | $C_nH_{2n+1}$ | $OCF_3$ | H | H |
| $nOCF_2$ | $C_nH_{2n+1}$ | $OCHF_2$ | H | H |
| nS | $C_nH_{2n+1}$ | NCS | H | H |
| rVsN | $C_rH_{2r+1}-CH=CH-C_sH_{2s}-$ | CN | H | H |
| rEsN | $C_rH_{2r+1}-O-C_sH_{2s}-$ | CN | H | H |
| nNF | $C_nH_{2n+1}$ | CN | F | H |
| nAm | $C_nH_{2n+1}$ | $COOC_mH_{2m+1}$ | H | H |

Tabelle A:

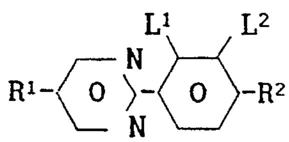

PYP

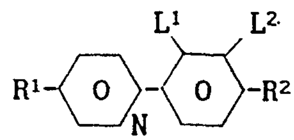

PYRP

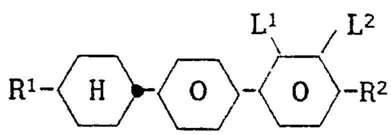

BCH

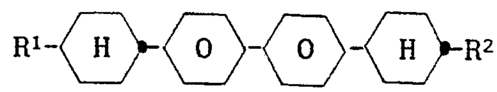

CBC

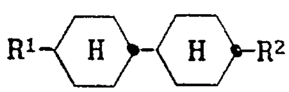

CCH

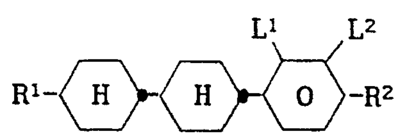

CCP

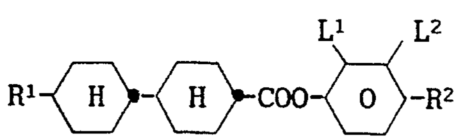

CP

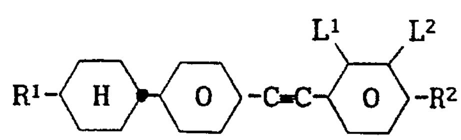

CPTP

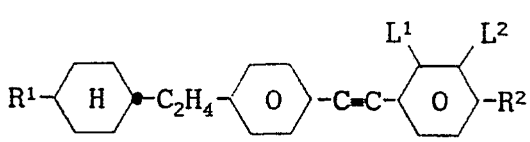

CEPTP

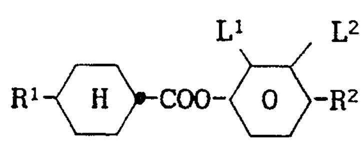

D

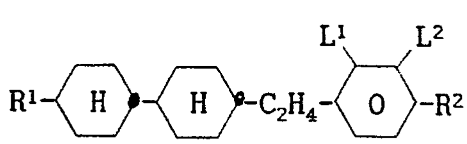

ECCP

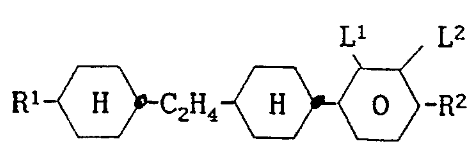

CECP

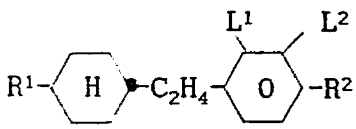

EPCH

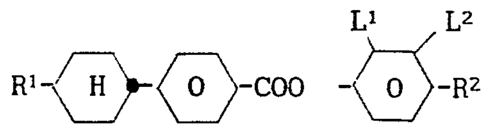

HP

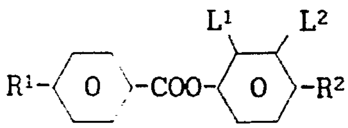

ME

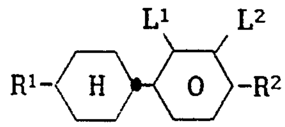

PCH

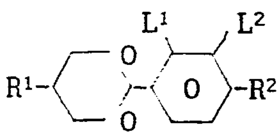

PDX

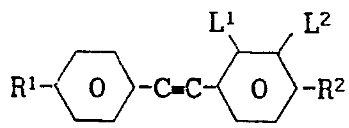

PTP

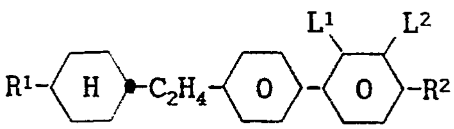

BECH

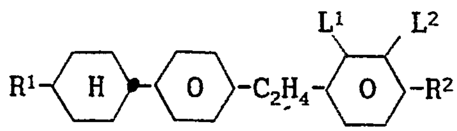

EBCH

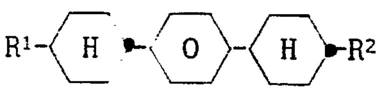

CPC

Tabelle B:

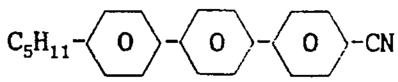

T15

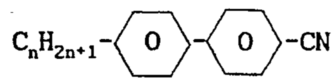

K3n

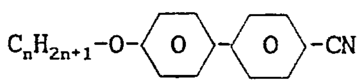

M3n

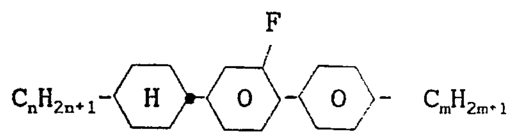

BCH-n.Fm

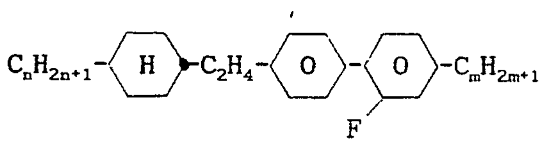

Inm

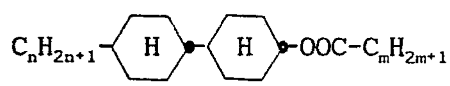

C-nm

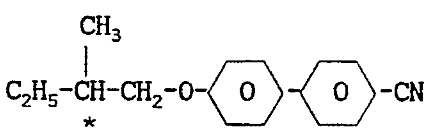

C15

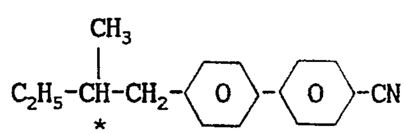

CB15

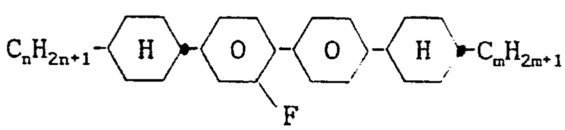

CBC-nmF

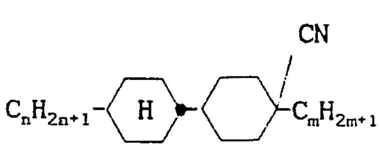

CCN-nm

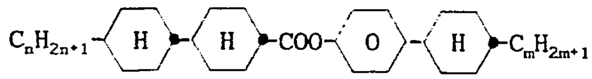

CCPC-nm

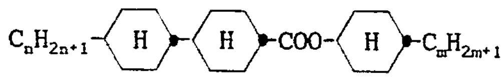

CH-nm

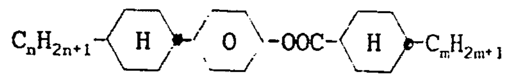

HD-nm

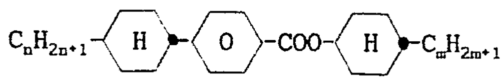

HH-nm

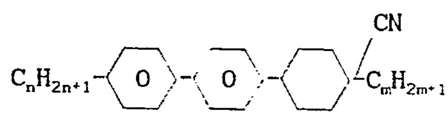

NCB-nm

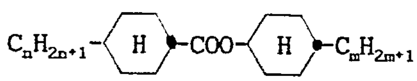

OS-nm

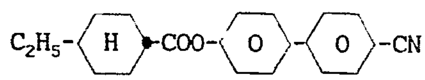

CHE

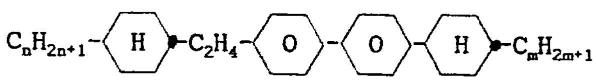

ECBC-nm

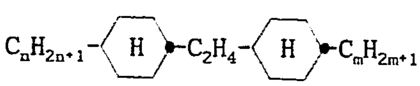

ECCH-nm

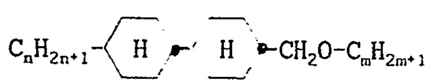

CCH-n1Em

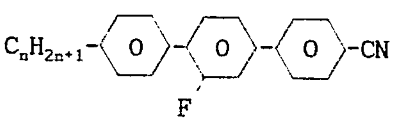

T-nFn

Die folgenden Flüssigkristallmischungen zeigen in SFA vorteilhafte Eigenschaften

| Beispiel 4 | | | |
|---|---|---|---|
| G6 | 8.00 | S/N | N/I |
| G9 | 13.00 | < -40 | +88 |
| G15 | 13.00 | | |
| G21 | 8.00 | | |
| D-302FF | 7.00 | | |
| D-502FF | 6.00 | | |
| CP-302FF | 7.00 | | |
| ECCP-31 | 8.00 | | |
| ECCP-33 | 6.00 | | |
| ECCP-35 | 8.00 | | |
| ECCP-3 | 8.00 | | |
| ECCP-3F | 8.00 | | |

| Beispiel 5 | | | |
|---|---|---|---|
| G6 | 8.00 | S/N | N/I |
| G9 | 13.00 | < -40 | +90 |
| G15 | 13.00 | | |
| G21 | 8.00 | | |
| D-302FF | 7.00 | | |
| D-502FF | 6.00 | | |
| CP-302FF | 7.00 | | |
| ECCP-31 | 8.00 | | |
| ECCP-33 | 6.00 | | |
| ECCP-35 | 8.00 | | |
| ECCP-3 | 8.00 | | |
| ECCP-3F | 8.00 | | |

| Beispiel 6 | | | |
|---|---|---|---|
| PCH-3 | 18.00 | S/N | N/I |
| PCH-4 | 12.00 | -40 | +86 |
| G6 | 6.00 | | |
| G9 | 10.00 | | |
| G15 | 10.00 | | |
| CCH-303 | 3.00 | | |
| ECCP-3 | 8.00 | | |
| ECCP-3F | 6.00 | | |
| ECCP-5F | 6.00 | | |
| CH-33 | 4.00 | | |
| CH-35 | 4.00 | | |
| CP-33 | 5.00 | | |
| CP-35 | 4.00 | | |
| CP-43 | 4.00 | | |

| Beispiel 7 | | | |
|---|---|---|---|
| PCH-3 | 18.00 | S/N | N/I |
| PCH-4 | 12.00 | < -40 | + 89 |
| G6 | 6.00 | | |
| G9 | 10.00 | | |
| G15 | 10.00 | | |
| CCH-303 | 3.00 | | |
| CCP-3N | 8.00 | | |
| CCP-3F | 6.00 | | |
| ECCP-5F | 6.00 | | |
| CH-33 | 4.00 | | |
| CH-35 | 4.00 | | |
| CP-33 | 5.00 | | |
| CP-35 | 4.00 | | |
| CP-43 | 4.00 | | |

| Beispiel 8 | | |
|---|---|---|
| PCH-2 | 13.00 | N/I |
| PCH-3 | 7.00 | 98 |
| G9 | 10.00 | |
| K9 | 2.00 | |
| PYP-3N.F | 5.00 | |
| PYP-5N.F | 5.00 | |
| PCH-301 | 10.00 | |
| PCH-501 | 10.00 | |
| ECCP-31 | 6.00 | |
| ECCP-32 | 6.00 | |
| ECCP-33 | 6.00 | |
| CBC-33 | 5.00 | |
| CBC-53 | 5.00 | |
| CBC-33F | 5.00 | |
| CBC-55F | 5.00 | |

| Beispiel 9 | | | |
|---|---|---|---|
| PCH-2 | 7.00 | S/N | N/I |
| PCH-3 | 17.00 | < -40 | +87 |
| G9 | 10.00 | | |
| ME2N | 5.00 | | |
| ME2N.F | 2.00 | | |
| ME3N.F | 3.00 | | |
| HP-3N.F | 5.00 | | |
| PCH-302 | 10.00 | | |
| CCH-303 | 4.00 | | |
| ECCP-31 | 6.00 | | |
| ECCP-32 | 7.00 | | |
| ECCP-33 | 7.00 | | |
| ECCP-35 | 5.00 | | |
| CPTP-301 | 4.00 | | |
| CPTP-302 | 4.00 | | |
| CPTP-303 | 4.00 | | |

| Beispiel 10 | |
|---|---|
| PCH-2 | 10.00 |
| PCH-3 | 20.00 |
| PCH-5 | 10.00 |
| G9 | 10.00 |
| ME2N | 5.00 |
| CCH-303 | 4.00 |
| ECCP-3F | 6.00 |
| ECCP-5F | 6.00 |
| ECCP-31 | 6.00 |
| ECCP-32 | 6.00 |
| ECCP-33 | 5.00 |
| CPTP-301 | 4.00 |
| CPTP-302 | 4.00 |
| CPTP-303 | 4.00 |

| Beispiel 11 | | | |
|---|---|---|---|
| PCH-3 | 16.00 | S/N | N/I |
| PCH-5F | 5.00 | < -40 | +97 |
| PCH-7F | 3.00 | | |
| CCH-501 | 9.00 | | |
| ECCP-3F | 14.00 | | |
| ECCP-5F | 15.00 | | |
| CP-3F | 15.00 | | |
| CP-5F | 15.00 | | |
| G9 | 8.00 | | |

| Beispiel 12 | | | |
|---|---|---|---|
| PCH-2 | 8.00 | S/N | N/I |
| PCH-3 | 19.00 | < -30 | +87 |
| K6 | 6.00 | | |
| K9 | 6.00 | | |
| G9 | 6.00 | | |
| ME2N.F | 2.00 | | |
| ME3N.F | 3.00 | | |
| PCH-302 | 6.00 | | |
| PTP-35 | 3.00 | | |
| PTP-102 | 3.00 | | |
| CPTP-302FF | 4.00 | | |
| ECCP-31 | 6.00 | | |
| ECCP-32 | 6.00 | | |
| ECCP-33 | 6.00 | | |
| ECCP-35 | 6.00 | | |
| CBC-33 | 5.00 | | |
| CBC-53 | 5.00 | | |

| Beispiel 13 | | | |
|---|---|---|---|
| PCH-2 | 7.00 | S/N | N/I |
| PCH-3 | 13.00 | < -30 | +81 |
| K6 | 7.00 | | |
| K9 | 7.00 | | |
| K15 | 3.00 | | |
| G9 | 9.00 | | |
| ME2N | 3.00 | | |
| ME2N.F | 2.00 | | |
| ME3N.F | 3.00 | | |
| PCH-302 | 5.00 | | |
| PTP-502FF | 4.00 | | |
| ECCP-31 | 6.00 | | |
| ECCP-32 | 7.00 | | |
| ECCP-33 | 7.00 | | |
| ECCP-35 | 5.00 | | |
| CBC-33F | 6.00 | | |
| CBC-53F | 6.00 | | |

| Beispiel 14 | | | |
|---|---|---|---|
| PCH-2 | 8.00 | S/N | N/I |
| PCH-3 | 17.00 | < -30 | +90 |
| K6 | 6.00 | | |
| K9 | 5.00 | | |
| G9 | 7.00 | | |
| ME2N | 3.00 | | |
| ME3N | 3.00 | | |
| ME2N.F | 2.00 | | |
| ME3N.F | 3.00 | | |
| PCH-302 | 6.00 | | |
| PTP-102 | 3.00 | | |
| CPTP-301 | 4.00 | | |
| CPTP-302FF | 4.00 | | |
| ECCP-31 | 6.00 | | |
| ECCP-32 | 6.00 | | |
| ECCP-33 | 7.00 | | |
| CBC-33 | 5.00 | | |
| CBC-53 | 5.00 | | |

| Beispiel 15 | | | |
|---|---|---|---|
| PCH-2 | 10.00 | S/N | N/I |
| PCH-3 | 18.00 | < -40 | +85 |
| PCH-4 | 14.00 | | |
| PCH-5 | 13.00 | | |
| G9 | 8.00 | | |
| ECCP-31 | 6.00 | | |
| ECCP-32 | 6.00 | | |
| ECCP-33 | 6.00 | | |
| ECCP-35 | 6.00 | | |
| CPTP-301 | 5.00 | | |
| CPTP-302 | 4.00 | | |
| CPTP-303 | 4.00 | | |

| Beispiel 16 | | | |
|---|---|---|---|
| PCH-2 | 8.00 | S/N | N/I |
| PCH-3 | 17.00 | < -40 | 83 |
| K6 | 6.00 | | |
| K9 | 6.00 | | |
| G9 | 6.00 | | |
| ME2N.F | 2.00 | | |
| ME3N.F | 2.00 | | |
| PCH-302 | 6.00 | | |
| PTP-35 | 5.00 | | |
| PTP-102 | 5.00 | | |
| CPTP-301 | 4.00 | | |
| ECCP-31 | 8.00 | | |
| ECCP-32 | 8.00 | | |
| ECCP-33 | 7.00 | | |
| CBC-33F | 5.00 | | |
| CBC-53F | 5.00 | | |

| Beispiel 17 | | | |
|---|---|---|---|
| PCH-2 | 8.00 | S/N | N/I |
| PCH-3 | 17.00 | < -40 | 83 |
| K6 | 6.00 | | |
| K9 | 6.00 | | |
| G9 | 6.00 | | |
| ME2N.F | 3.00 | | |
| ME3N.F | 2.00 | | |
| PCH-302 | 6.00 | | |
| PTP-35 | 5.00 | | |
| PTP-102 | 5.00 | | |
| CPTP-302FF | 4.00 | | |
| ECCP-31 | 8.00 | | |
| ECCP-32 | 8.00 | | |
| ECCP-33 | 7.00 | | |
| CBC-33F | 5.00 | | |
| CBC-53F | 5.00 | | |

| Beispiel 18 | | | |
|---|---|---|---|
| PCH-2 | 8.00 | S/N | N/I |
| PCH-3 | 17.00 | < -40 | 83 |
| K6 | 6.00 | | |
| K9 | 5.00 | | |
| G9 | 7.00 | | |
| ME2N.F | 2.00 | | |
| ME3N.F | 3.00 | | |
| PCH-302 | 6.00 | | |
| PTP-35 | 5.00 | | |
| PTP-102 | 5.00 | | |
| CPTP-302FF | 4.00 | | |
| ECCP-31 | 8.00 | | |
| ECCP-32 | 7.00 | | |
| ECCP-33 | 8.00 | | |
| CBC-33F | 5.00 | | |
| CBC-53F | 4.00 | | |

| Beispiel 19 | | | |
|---|---|---|---|
| PCH-2 | 8.00 | S/N | N/I |
| PCH-3 | 17.00 | < -30 | 87 |
| K6 | 6.00 | | |
| K9 | 6.00 | | |
| G9 | 6.00 | | |
| ME2N.F | 2.00 | | |
| ME3N.F | 2.00 | | |
| PCH-302 | 6.00 | | |
| PTP-35 | 3.00 | | |
| PTP-102 | 3.00 | | |
| CPTP-302FF | 4.00 | | |
| ECCP-31 | 7.00 | | |
| ECCP-32 | 7.00 | | |
| ECCP-33 | 7.00 | | |
| ECCP-35 | 6.00 | | |
| CBC-33F | 5.00 | | |
| CBC-53F | 5.00 | | |

| Beispiel 20 | | | |
|---|---|---|---|
| PCH-2 | 8.00 | S/N | N/I |
| PCH-3 | 17.00 | < -20 | 88 |
| K6 | 6.00 | | |
| K9 | 6.00 | | |
| G9 | 6.00 | | |
| ME2N.F | 2.00 | | |
| ME3N.F | 2.00 | | |
| PCH-302 | 7.00 | | |
| PTP-35 | 3.00 | | |
| PTP-102 | 3.00 | | |
| CPTP-302FF | 4.00 | | |
| ECCP-31 | 7.00 | | |
| ECCP-32 | 7.00 | | |
| ECCP-33 | 7.00 | | |
| ECCP-35 | 6.00 | | |
| CBC-33F | 5.00 | | |
| CBC-53F | 4.00 | | |

| Beispiel 21 | | | |
|---|---|---|---|
| PCH-2 | 8.00 | S/N | N/I |
| PCH-3 | 18.00 | < -40 | 78 |
| K6 | 6.00 | | |
| K9 | 5.00 | | |
| G9 | 9.00 | | |
| ME2N | 3.00 | | |
| ME2N.F | 2.00 | | |
| ME3N.F | 3.00 | | |
| PCH-302 | 8.00 | | |
| PTP-102 | 3.00 | | |
| ECCP-31 | 6.00 | | |
| ECCP-32 | 7.00 | | |
| ECCP-33 | 7.00 | | |
| ECCP-35 | 5.00 | | |
| CBC-33F | 5.00 | | |
| CBC-53F | 5.00 | | |

| Beispiel 22 | |
|---|---|
| PCH-2 | 7.00 |
| PCH-3 | 17.00 |
| G9 | 10.00 |
| ME2N | 3.00 |
| ME2N.F | 2.00 |
| ME3N.F | 3.00 |
| HP-3N.F | 3.00 |
| CCH-303 | 12.00 |
| ECCP-3F | 6.00 |
| ECCP-31 | 6.00 |
| ECCP-32 | 7.00 |
| ECCP-33 | 7.00 |
| ECCP-35 | 5.00 |
| CPTP-301 | 4.00 |
| CPTP-302 | 4.00 |
| CPTP-303 | 4.00 |

| Beispiel 23 | | | |
|---|---|---|---|
| PCH-2 | 7.00 | S/N | N/I |
| PCH-3 | 17.00 | < -40 | +87 |
| G9 | 10.00 | | |
| ME2N | 5.00 | | |
| ME2N.F | 2.00 | | |
| ME3N.F | 3.00 | | |
| HP-3N.F | 5.00 | | |
| PCH-302 | 10.00 | | |
| CCH-303 | 4.00 | | |
| ECCP-31 | 6.00 | | |
| ECCP-32 | 7.00 | | |
| ECCP-33 | 7.00 | | |
| ECCP-35 | 5.00 | | |
| CPTP-301 | 4.00 | | |
| CPTP-302 | 4.00 | | |
| CPTP-303 | 4.00 | | |

| Beispiel 24 | | | |
|---|---|---|---|
| PCH-2 | 7.00 | S/N | N/I |
| PCH-3 | 17.00 | < -40 | +85 |
| K6 | 6.00 | | |
| K9 | 6.00 | | |
| G9 | 6.00 | | |
| ME2N.F | 2.00 | | |
| ME3N.F | 2.00 | | |
| PCH-302 | 6.00 | | |
| PTP-35 | 5.00 | | |
| PTP-102 | 5.00 | | |
| CPTP-301 | 4.00 | | |
| ECCP-31 | 8.00 | | |
| ECCP-32 | 8.00 | | |
| ECCP-33 | 7.00 | | |
| CBC-33F | 5.00 | | |
| CBC-53F | 5.00 | | |

| Beispiel 25 | | | |
|---|---|---|---|
| PCH-2 | 8.00 | S/N | N/I |
| PCH-3 | 18.00 | < -20 | +88 |
| K6 | 6.00 | | |
| K9 | 6.00 | | |
| G9 | 6.00 | | |
| ME2N.F | 2.00 | | |
| ME3N.F | 2.00 | | |
| PCH-302 | 6.00 | | |
| PTP-35 | 3.00 | | |
| PTP-102 | 3.00 | | |
| CPTP-302FF | 4.00 | | |
| ECCP-31 | 7.00 | | |
| ECCP-32 | 7.00 | | |
| ECCP-33 | 7.00 | | |
| ECCP-35 | 6.00 | | |
| CBC-33 | 5.00 | | |
| CBC-53 | 4.00 | | |

| Beispiel 26 | | | |
|---|---|---|---|
| PCH-2 | 8.00 | S/N | N/I |
| PCH-3 | 17.00 | < -20 | +87 |
| K6 | 6.00 | | |
| K9 | 6.00 | | |
| G9 | 7.00 | | |
| ME2N.F | 2.00 | | |
| ME3N.F | 2.00 | | |
| PCH-302 | 6.00 | | |
| PTP-35 | 3.00 | | |
| PTP-102 | 3.00 | | |
| CPTP-302FF | 4.00 | | |
| ECCP-31 | 7.00 | | |
| ECCP-32 | 7.00 | | |
| ECCP-33 | 7.00 | | |
| ECCP-35 | 6.00 | | |
| CBC-33 | 5.00 | | |
| CBC-53 | 4.00 | | |

| Beispiel 27 | | | |
|---|---|---|---|
| PCH-2 | 8.00 | S/N | N/I |
| PCH-3 | 19.00 | < 0 | +87 |
| K6 | 6.00 | | |
| K9 | 6.00 | | |
| G9 | 6.00 | | |
| ME2N.F | 2.00 | | |
| ME3N.F | 3.00 | | |
| PCH-302 | 4.00 | | |
| PTP-35 | 3.00 | | |
| PTP-102 | 3.00 | | |
| CPTP-302FF | 4.00 | | |
| ECCP-31 | 7.00 | | |
| ECCP-32 | 7.00 | | |
| ECCP-33 | 7.00 | | |
| ECCP-35 | 6.00 | | |
| CBC-33 | 5.00 | | |
| CBC-53 | 4.00 | | |

| Beispiel 28 | | | |
|---|---|---|---|
| PCH-3 | 22.00 | S/N | N/I |
| PCH-4 | 20.00 | < -30 | +88 |
| G9 | 13.00 | | |
| HP-3N.F | 4.00 | | |
| ECCP-31 | 6.00 | | |
| ECCP-32 | 6.00 | | |
| ECCP-33 | 6.00 | | |
| ECCP-35 | 5.00 | | |
| CP-3F | 8.00 | | |
| CP-5F | 5.00 | | |
| BCH-32 | 5.00 | | |

| Beispiel 29 | | | |
|---|---|---|---|
| PCH-2 | 8.00 | S/N | N/I |
| PCH-3 | 18.00 | < -30 | +77 |
| K6 | 6.00 | | |
| K9 | 5.00 | | |
| G9 | 9.00 | | |
| ME2N | 3.00 | | |
| ME2N.F | 2.00 | | |
| ME3N.F | 3.00 | | |
| PCH-302 | 6.00 | | |
| PTP-35 | 3.00 | | |
| PTP-102 | 4.00 | | |
| ECCP-31 | 6.00 | | |
| ECCP-32 | 6.00 | | |
| ECCP-33 | 5.00 | | |
| ECCP-35 | 5.00 | | |
| CBC-33F | 5.00 | | |
| CBC-53F | 6.00 | | |

| Beispiel 30 | | | |
|---|---|---|---|
| PCH-2 | 7.00 | S/N | N/I |
| PCH-3 | 12.00 | < -31 | +77 |
| K6 | 7.00 | | |
| K9 | 7.00 | | |
| K15 | 4.00 | | |
| G9 | 9.00 | | |
| ME2N | 3.00 | | |
| ME2N.F | 2.00 | | |
| ME3N.F | 3.00 | | |
| PCH-302 | 8.00 | | |
| PTP-102 | 3.00 | | |
| ECCP-31 | 6.00 | | |
| ECCP-32 | 7.00 | | |
| ECCP-33 | 7.00 | | |
| ECCP-35 | 5.00 | | |
| CBC-33F | 5.00 | | |
| CBC-53F | 5.00 | | |

**Ansprüche**

1. Supertwist-Flüssigkristallanzeige mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 160 und 360°, dadurch gekennzeichnet, daß die nematische Flüssigkristallmischung

a) mindestens eine Komponente, ausgewählt aus der Gruppe A, bestehend aus Verbindungen der Formeln AI bis AVI:

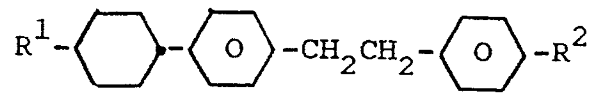
AI

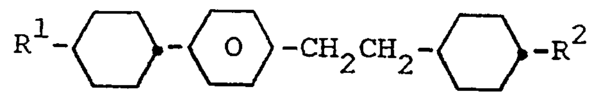
AII

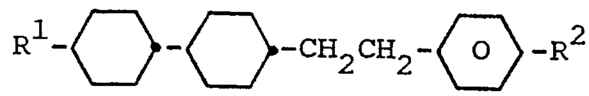
AIII

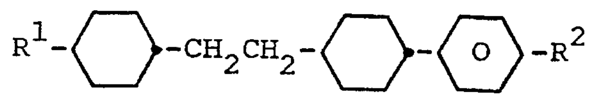
AIV

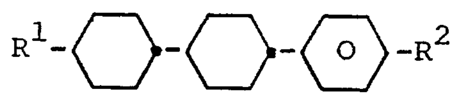
AV

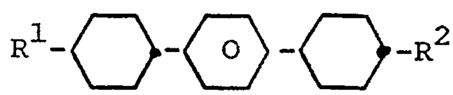
AVI

worin $R^1$ und $R^2$ jeweils unabhängig voneinander jeweils R bedeuten und
R Alkyl mit 1-12 C-Atomen ist, worin auch eine oder zwei nicht benachbarte $CH_2$-Gruppen durch -O-, -CH=CH-, -CO-, -O-CO- oder -CO-O- ersetzt sein können,
b) 0-40 Gew.% einer flüssigkristallinen Komponente B bestehend aus Verbindungen ausgewählt aus den Gruppen B1, B2 und B3, wobei Gruppe B1 aus den Verbindungen der Formeln BI bis BIV besteht:

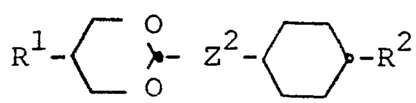
BI

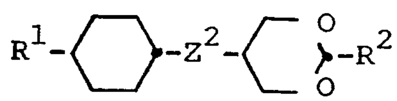
BII

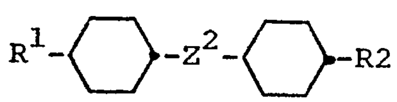
BIII

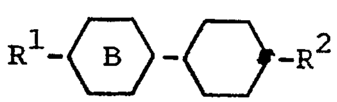
BIV

worin $R^1$ und $R^2$ jeweils unabhängig voneinander die für R angegebene Bedeutung haben, $Z^2$ $-CH_2CH_2-$, -CO-O-, -O-CO- oder eine Einfachbindung, und

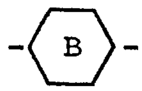 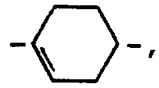, 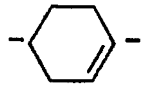 oder 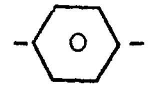

bedeutet;

Gruppe B2 besteht aus den Verbindungen der Formeln BV bis BVII:

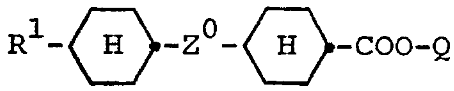 BV

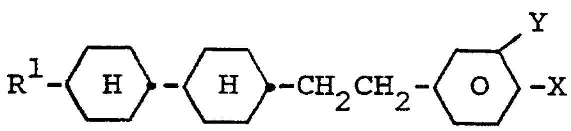 BVI

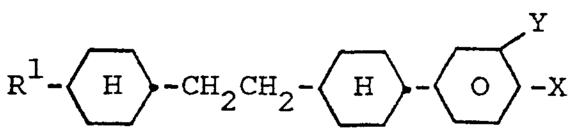 BVII

worin $R^1$ die für R angegebene Bedeutung hat, $Z^0$ $-CH_2CH_2-$ oder eine Einfachbindung ist und

Q 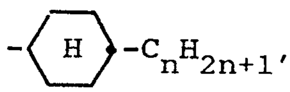, 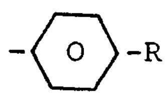 oder 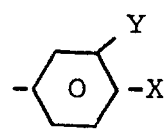

bedeutet,

wobei n 1 bis 9 ist, X bedeutet CN oder F und Y ist H oder F; und

Gruppe B3 besteht aus den Verbindungen der Formeln BVIII und BIX:

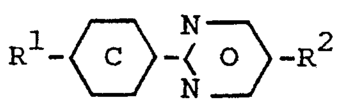 BVIII

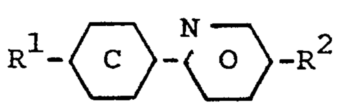 BIX

worin $R^1$ und $R^2$ jeweils unabhängig voneinander die für R angegebene Bedeutung haben, und

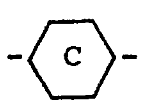 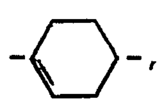, 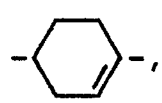, 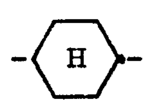

oder 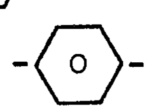 bedeutet,

c) 10-80 Gew.% einer flüssigkristallinen Komponente C, bestehend aus einer oder mehreren Verbindungen mit einer dielektrischen Anisotropie von über +1,5, wobei Komponente C mindestens eine Verbindung der Formal Ca enthält,

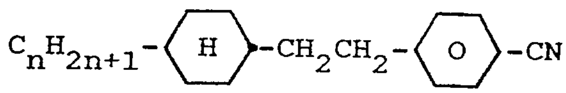 Ca

worin n 1 bis 7 bedeutet,

d) 0-20 Gew.% einer flüssigkristallinen Komponente D, bestehend aus einer oder mehreren Verbindungen mit einer dielektrischen Anisotropie von unter -1,5 und

e) einer optisch aktiven Komponente E in einer Menge, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt, und

daß die nematische Flüssigkristallmischung einen nematischen Phasenbereich von mindestens 60 °C, eine Viskosität von nicht mehr als 30 mPa.s und eine dielektrische Anisotropie von mindestens +5 aufweist, wobei die dielektrischen Anisotropien der Verbindungen und die auf die nematische Flüssigkristallmischung bezogenen Parameter auf eine Temperatur von 20 °C bezogen sind.

2. Anzeige nach Anspruch 1, dadurch gekennzeichnet, daß Komponente C zusätzlich Verbindungen enthält, ausgewählt aus der Gruppe C, bestehend aus den Verbindungen der Formeln CI bis CIII:

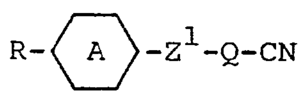 CI

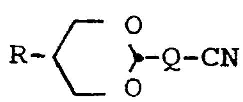 CII

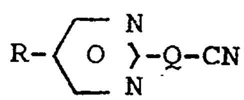 CIII

worin

R die in Anspruch 1 angegebene Bedeutung hat,

Q 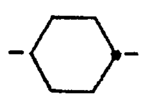, 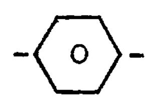, 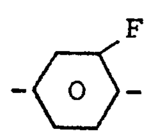 oder 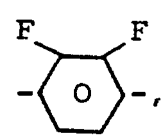,

$Z^1$ 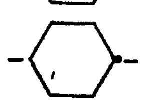, 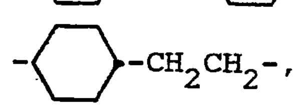,

eine Einfachbindung,

-CO-O- oder -O-CO- und

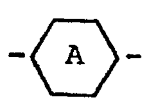 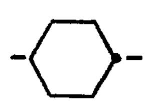 oder 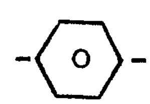

bedeutet.

3. Anzeige nach mindestens einem der Ansprüche 1 und 2, dadurch gekennzeichnet, daß die nematische Flüssigkristallmischung zusammengesetzt ist aus 30-60 Gew.% Komponente C, 20-70 Gew.% Verbindungen aus den Gruppen A und B, 0-10 Gew.% Komponente D und einer sich zu 100 Gew.% addierenden Menge der Komponente E.

4. Anzeige nach mindestens einem der Ansprüche 1 bis 3, dadurch gekennzeichnet, daß Komponente D eine oder mehrere Verbindungen mit einer 1-Cyan-trans-1,4-cyclohexylen-Gruppe oder einer 2,3-Difluor-1,4-phenylen-Gruppe enthält.

5. Anzeige nach mindestens einem der Ansprüche 1 bis 4, dadurch gekennzeichnet, daß die nematische Flüssigkristallmischung mindestens zwei Verbindungen der Formel AIII oder AV enthält.

6. Anzeige nach Anspruch 5, dadurch gekennzeichnet, daß die nematische Flüssigkristallmischung Verbindungen der Formel AIII und AV enthält.

7. Anzeige nach mindestens einem der Ansprüche 1 bis 6, dadurch gekennzeichnet, daß die nematische Flüssigkristallmischung Verbindungen der Formel BIII enthält.

8. Anzeige nach Anspruch 7, dadurch gekennzeichnet, daß die Flüssigkristallmischung Verbindungen der Formel

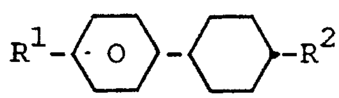

enthält, worin $R^1$ $CH_3-(CH_2)_n-O-$ oder trans-$H-(CH_2)_r-CH=CH-(CH_2CH_2)_s-CH_2-O-$ und $R^2$ $CH_3-(CH_2)_t-$ ist, wobei
n 1, 2, 3 oder 4,
r 0, 1, 2 oder 3,
s 0 oder 1, und
t 1, 2, 3 oder 4 ist.

9. Anzeige nach Anspruch 7 oder 8, dadurch gekennzeichnet, daß die Flüssigkristallmischung Verbindungen der Formeln

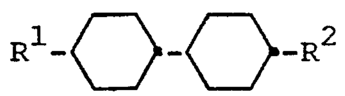 oder

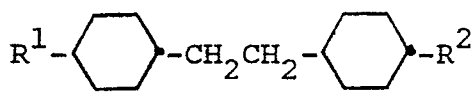 enthält,

worin
$R^1$ $CH_3-(CH_2)_n-O-$, $CH_3-(CH_2)_t-$, trans-$H-(CH_2)_r-CH=CH-(CH_2CH_2)_s-CH_2O-$ oder trans-$H-(CH_2)_r-CH=CH-(CH_2CH_2)_s-$, und
$R^2$ $CH_3-(CH_2)_t-$ ist,
wobei n, r, s und t die in Anspruch 8 angegebene Bedeutung haben.

10. Anzeige nach mindestens einem der Ansprüche 1 bis 9, dadurch gekennzeichnet, daß Komponente C eine oder mehrere Verbindungen mit einer 4-Fluorphenyl-Gruppe oder einer 3,4-Difluorphenyl-Gruppe enthält.

11. Anzeige nach Anspruch 10, dadurch gekennzeichnet, daß die Flüssigkristallmischung mindestens eine Verbindung aus folgender Gruppe

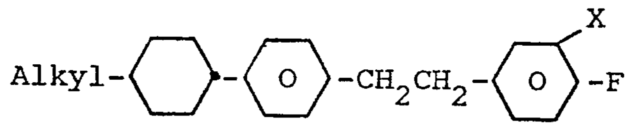

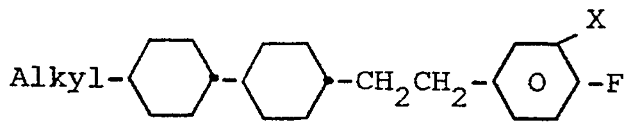

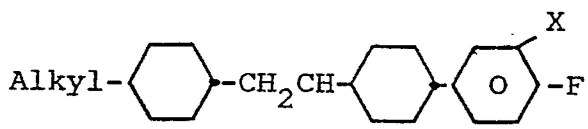

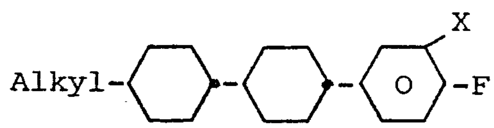

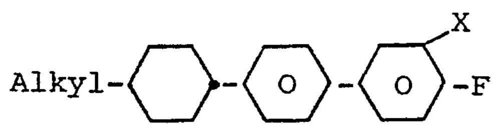

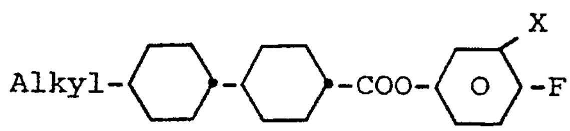

enthält, worin Alkyl eine geradkettige Alkylgruppe mit 2-7 C-Atomen und X H oder F ist.

12. Anzeige nach mindestens einem der Ansprüche 1 bis 11, dadurch gekennzeichnet, daß die Flüssigkristallmischung eine oder mehrere Verbindungen enthält, worin R eine trans-Alkenylgruppe oder eine trans-Alkenyloxygruppe ist.

13. Nematische Flüssigkristallmischung der in mindestens einer der Ansprüche 1 bis 12 definierten Zusammensetzung.